# EUROPÄISCHE PATENTSCHRIFT

(11) **EP 1 224 705 B1**
(45) Veröffentlichungstag und Bekanntmachung des Hinweises auf die Patenterteilung: **23.07.2003**
(21) Anmeldenummer: 00967564.6
(22) Anmeldetag: 12.09.2000
(51) Int. Cl.: H01M 8/06, H01M 8/10

(54) **BRENNSTOFFZELLE MIT INTERNEM REFORMER UND VERFAHREN ZU DEREN BETRIEB**
FUEL CELL HAVING AN INTERNAL REFORMER AND A METHOD FOR OPERATING SAME
PILE A COMBUSTIBLE A REFORMEUR INTERNE, ET PROCEDE POUR LA FAIRE FONCTIONNER

(30) Priorität: 23.09.1999 DE 19945667
(43) Veröffentlichungstag der Anmeldung: 24.07.2002
(73) Patentinhaber: SIEMENS AKTIENGESELLSCHAFT, 80333 München (DE)
(72) Erfinder: PREIDEL, Walter, 91058 Erlangen (DE)
(86) Internationale Anmeldenummer: DE0003167
(87) Internationale Veröffentlichungsnummer: WO01022516

(56) Entgegenhaltungen:
- WO-A-00/30200
- WO-A-99/08336
- FR-A- 1 553 361
- US-A- 5 795 668
- PATENT ABSTRACTS OF JAPAN vol. 1999, no. 04, 30. April 1999 (1999-04-30) -& JP 11 016588 A (JAPAN STORAGE BATTERY CO LTD), 22. Januar 1999 (1999-01-22)

## Beschreibung

Die Erfindung bezieht sich auf eine Brennstoffzelle mit internem Reformer, enthaltend eine Reformerkammer, und mit einer Membran-Elektrodeneinheit, enthaltend eine Anodenkammer und eine anodische Elektrodenbeschichtung und mit Katalysatorschichten. Daneben bezieht sich die Erfindung auch auf ein Verfahren zum Betrieb einer solchen Brennstoffzelle.

Aus der DE 196 256 21 A1 ist eine Direkt-Methanol-Brennstoffzelle (DMFC = Direct Methanol Fuel Cell) bekannt, die mit gasförmigem Brennstoff betrieben wird. Nachteilig an dieser DMFC ist, dass als Brennstoff ein Methanol/Wassergemisch eingesetzt wird, das eine geringere Leistungsdichte der Zelle bewirkt als das bei der Umsetzung von reinem Wasserstoff als Brennstoff der Fall wäre.

Aus der DE 196 32 285 A1 ist eine Membran für eine Brennstoffzelle bekannt, die im Temperaturbereich von -50°C bis 400°C stabil und arbeitsfähig ist. Dieses Material kann als Elektrolyt für eine Direkt-Methanol-Brennstoffzelle mit internem Reformer eingesetzt werden.

Weiterhin ist aus der WO 99/08336 A2 eine mit Methanol arbeitende Brennstoffzelle, bestehend aus Anode, Elektrolyt und Kathode, bekannt, bei der sich auf der Anodenseite eine Sperrschicht befindet, die Brennstoffe und Elektrolyt trennt, wobei die Sperrschicht durchlässig für Wasserstoff ist, und bei der zusätzlich ein Katalysator vorgesehen ist, der den durch die Sperrschicht hindurchtretenden Wasserstoff oxidiert. Durch interne Reformierung wird aus dem Methanol also Wasserstoff zum Betrieb der Brennstoffzelle erzeugt.

Aufgabe der Erfindung ist es, die Leistungsdichte vom Stand der Technik der bekannten Brennstoffzelle zu verbessern und hierzu ein geeignetes Betriebsverfahren anzugeben.

Die Aufgabe ist durch die Merkmale des Patentanspruches 1 gelöst. Ein geeignetes Verfahren zum Betrieb einer solchen Brennstoffzelle ist Gegenstand des Patentanspruches 6. Weiterbildungen sind in den jeweils abhängigen Ansprüchen angegeben.

Gegenstand der Erfindung ist eine Brennstoffzelle mit Membran-Elektroden-Einheit und internem Reformer, bei der in der Anodenkammer im Anschluss an die anodische Elektrodenbeschichtung, die sowohl für die Umsetzung von Methanol als auch für die Umsetzung von Wasserstoff geeignet ist, eine zweite Katalysatorschicht für eine Reformierungsreaktion vorgesehen ist. Bei genügend hohem Druck und/oder Betriebstemperatur findet an der zweiten Katalysatorschicht die Reformierungsreaktion statt, wobei aus dem Brennstoff Methanol/Wasser der Brennstoff Wasserstoff gewonnen wird. Nachdem die zweite Katalysatorschicht innerhalb der Anodenreaktionskammer angeordnet ist, wird hier von einer Zelle mit internem Reformer gesprochen.

Beim erfindungsgemäßen Verfahren wird die Brennstoffzelle einmal als Direkt-Methanol-Brennstoffzelle mit einem Methanol-/Wasser-Gemisch als Brennstoff betrieben. Sofern der Betriebsdruck und/oder die Betriebstemperatur ausreichen, kann innerhalb der Brennstoffzelle die Reformierungsreaktion stattfinden und die Brennstoffzelle arbeitet dann mit Wasserstoff als Brennstoff.

Nach einer vorteilhaften Ausgestaltung der Brennstoffzelle befindet sich im Anschluss an die aktive Katalysatorschicht für die anodische Oxidation, also der anodischen Elektrodenbeschichtung der Membran-Elektroden-Einheit der Brennstoffzelle, ein Separator, der zwischen den beiden Katalysatorschichten liegt, der gas- und/oder flüssigkeitsdurchlässig ist und der Wärme und elektrischen Strom leitet.

Weitere Vorteile und Einzelheiten der Erfindung ergeben sich aus nachfolgender Beschreibung von Ausführungsbeispielen in Verbindung mit den Patentansprüchen.

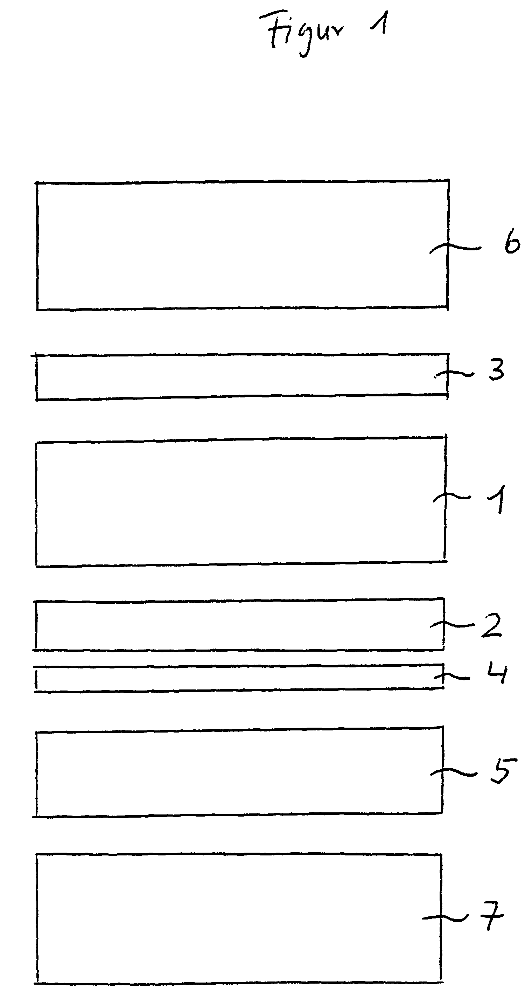

Zunächst wird die Erfindung anhand einer Figur, die eine schematische Widergabe einer Ausführungsform darstellt, näher erläutert. Die Figur stellt eine Explosions-Ansicht dar, so dass Schichten, die direkt aneinander anschließen der Übersichtlichkeit wegen als separate Blöcke gezeigt sind.

In der Figur sind die wesentlichen Bestandteile einer Membran-Elektroden-Einheit(Membrane-Electrode-Assembly = MEA) für die Ausführungsform der Direkt-Methanol-Brennstoffzelle, die einen Separator zwischen der anodischen Elektrodenbeschichtung der MEA und der Reformer-Katalysatorschicht hat, gezeigt: An den beiden äußeren Seiten wird die MEA jeweils von einem Stromkollektor 6,7, der direkt an die - nicht gezeigten - Bipolarplatten, die jede Zelle umfassen, anschließt. Die Stromkollektoren 6,7 dienen zum Stromabgriff und unter Umständen auch als Gas- und/oder Flüssigkeitsverteiler, je nach Struktur. Das Material des Stromkollektors sollte porös sein, gute elektronische Leitfähigkeit aufweisen, und einen geringen Kontaktwiderstand haben. Z.B. kann an dieser Stelle Kohlepapier eingesetzt werden, das z.B. mit einem hydrophobem Polymer behandelt wurde.

Die in der Figur nicht dargestellten Bipolarplatten, die die Brennstoffzelleneinheit abschließen und für den Prozessgas-, Strom- und Wärmetransport sowie für die Kühlung sorgen, können aus verschiedenen Materialien sein, beispielsweise aus Metall und/oder Kohle.

Kathodenseitig schließt an den Stromkollektor 6 die aktive Katalysatorschicht 3 für die kathodische Reduktion an, die ihrerseits direkt an den Elektrolyten 1 anschließt. Der Elektrolyt 1 ist eine Membran, die bevorzugt eine gute Protonenleitfähigkeit aufweist, nicht unbedingt Wasser zur Protonenleitung benötigt und die temperaturstabil mindestens bis zu den oberen Betriebstemperaturen von 250°C ist. Eine derartige Membran ist aus der eingangs genannten DE 196 32 285 A1 bekannt.

Die Elektrolytmembran 1 kann mit einer zusätzliche Textilgewebeschicht zur Versteifung oder einer Textileinlage zur Einsparung von Iononmer versehen sein. Insbesondere durch die Gewebeeinlage kann die mechanische Festigkeit der Elektrolytmembran 1 soweit erhöht werden, dass sie einen Teil des Drucks auf der Anodenseite kompensiert und so der Druck auf der Kathodenseite nicht zwangsläufig gleich dem Druck auf der Anode sein muss. Eine Textileinlage von 20 bis 70% des Volumens führt neben einer Kosteneinsparung der Elektrolytmembran 1 zu einer drastischen Erhöhung der Druckfestigkeit. Damit kann auch die Dicke der Membran signifikant reduziert werden.

Angrenzend an den Elektrolyten 1 befindet sich die aktive Katalysatorschicht 2 für die anodische Oxidation die von der Reformer-Katalysatorschicht 5 durch den Separator 4 getrennt wird. Dieser Separator kann ebenso wie die Stromkollektoren 6 und 7 ein dünnes Kohlepapier sein, weil die Anforderungen an beide Bauteile ähnlich sind. Dabei ist der Separator 4 gegenüber den Stromkollektoren 6 und 7 vergleichsweise dünner.

Vorteilhafterweise befindet sich im Anschluss an die Reformer-Katalysatorschicht ein Stromkollektor wie ein Kohlepapier, das den Strom aus der Zelle zur Bipolar- bzw. Polplatte leitet.

Die beschriebene Brennstoffzelle wird bei einer Temperatur von 100°C bis 250°C, bevorzugt von 130°C bis 220°C und insbesondere von 200°C und/oder einem Betriebsdruck von 3 bis 7 bar, insbesondere von 5 bar betrieben.

Insbesondere während des Kaltstartens wird also die Brennstoffzelle beim Anfahren mit flüssigem Brennstoff betrieben. Wenn der Betriebsdruck und/oder die Betriebstemperatur hoch genug sind, setzt die Reformierungsreaktion ein, und die Zelle wird nicht mehr mit einem Methanol/Wassergemisch sondern mit Reformergas als Brennstoff betrieben. In der Regel wird bei niedrigem Druck, auch bei Vorliegen gasförmigem Brennstoffs die Zelle als Direkt-Methanol-Zelle betrieben, während bei hohem Betriebsdruck und hoher Betriebstemperatur ein Reformer/Wasserstoffbetrieb der Zelle stattfindet.

Das Methanol-/Wassergemisch, das als Brennstoff für den Betrieb als Direkt-Methanol-Brennstoffzelle eingesetzt wird, setzt sich bevorzugt aus einem Anteil an Methanol von 0,5 mol/l bis 20 mol/l und einem Anteil an Wasser von 55 mol/l bis 20 mol/l zusammen.

Die "anodische Elektrodenbeschichtung der Membran-Elektroden-Einheit" oder die "aktive Katalysatorschicht für die anodische Oxidation", an der aus dem Wasserstoff Protonen, also Wasserstoff-Ionen und Elektronen gewonnen werden, umfasst bevorzugt einen Träger, auf dessen Oberfläche der Katalysator wie z.B. Platin oder eine Platin/Ruthenium Legierung, aufgebracht ist. Bevorzugt ist der Träger elektronisch leitend, wie z.B. ein Kohlepulver oder Ruß.

Nach einer Ausführungsform der Zelle folgt die Verteilung des metallischen Katalysators, der sehr teuer ist, weil es sich um Edelmetalle handelt, in der aktiven Katalysatorschicht einem Verteilungs-Gradienten, so dass an der Stelle, wo die katalytische Aktivität am meisten erforderlich ist, z.B. am Kontakt der aktiven Katalysatorschicht zur Membran, die Konzentration an Katalysator am höchsten ist und dort, wo die Umsetzungsrate und damit auch der Bedarf an Katalysator geringer ist, z.B. an der von der Membran weggewandten Seite der aktiven Katalysatorschicht, die Konzentration an Katalysator auch niedriger ist. Nicht nur das Verhältnis Katalysator zu Träger kann über den Verteilungs-Gradienten beschrieben werden, sondern auch das Verhältnis Metall I zu Metall II. So kann z.B. das teurere Metall an der Grenze zur Membran im Verhältnis 1:1 vorliegen, wie es für die katalytische Aktivität am günstigsten ist, und an der von der Membran weggewandten Seite nur noch im Verhältnis 9:1. Die Konzentration des Katalysators in der anodischen Elektrodenbeschichtung der MEA wird dementsprechend als variabel bezeichnet.

Nach einer anderen Ausführungsform besteht die aktive Katalysatorschicht der Anode nur aus dem metallischen Katalysator, was zwar teuer ist, aber dafür wird der Stromverlust durch Transport in Grenzen gehalten.

Die Reformer-Katalysatorschicht umfasst verschiedene Metalle, beispielsweise hat sich eine Katalysatormischung mit Kupfer und Zink auf der Basis von Korund (Al₂O₃) bewährt.

Die Reformer-Katalysatorschicht hat eine Masse zwischen 3 bis 50 mg/cm², bevorzugt zwischen 7 bis 30 mg/cm² und insbesondere bevorzugt zwischen 10 bis 15 mg/cm².

Die Reformer-Katalysatorschicht ist gas- und/oder flüssigkeitsdurchlässig. Bei der Umsetzung an dieser Katalysatorschicht findet die Reformierung des Brennstoffs statt, das heißt es wird im wesentlichen das Methanol-/Wassergemisch zu Wasserstoff und Kohlenmonoxid umgesetzt. An der Anode wird das Kohlenmonoxid zu Kohlendioxid umgesetzt, das kein Katalysatorgift ist und ein relativ neutrales und akzeptiertes Abgas ist.

Kritisch ist der anodische Stromtransport durch die Zelle, weil die Zelle anstatt einer Katalysatorschicht zwei Katalysatorschichten hat, durch die der an der Grenzfläche Anode/ Membran produzierte Strom möglichst ohne große Verluste bis zur Bipolarplatte geleitet werden soll. Deshalb ist es vorteilhaft, wenn der Katalysator für die Reformierungsreaktion auf einem elektronisch gut leitenden Träger wie z.B. Ruß und/ oder Kohlepulver aufgebracht ist, weil der Katalysator für die Reformierungsreaktion weder ein guter Strom- noch ein guter Wärmeleiter ist.

Die hier verwendete Membran-Elektroden-Einheit (MEA) umfasst vorteilhafterweise eine Membran mit beidseitiger Elektrodenbeschichtung und je nach Ausführung einen Stromkollektor wie ein, unter Umständen hydrophobiertes, Kohlepapier. Die Elektrodenbeschichtung umfasst eine aktive Katalysatorschicht, die den Katalysator gegebenenfalls auf einem elektronisch leitenden Träger hat.

Die beschriebene Brennstoffzelle arbeitet also - je nach Betriebsart - einmal als eine Direkt-Methanol-Brennstoffzelle und dann als eine mit Wasserstoff betriebene PEM-Brennstoffzelle. Bei höheren Betriebstemperaturen ist die Funktion einer Hochtempertur-Brennstoffzelle, d.h. eine HT-PEM-Brennstoffzelle, erfüllt.

Es ergeben sich somit für den praktischen Einsatz besondere Vorteile. Dies ist möglich, wenn jede Brennstoffzelleneinheit eine interne Reformerschicht enthält, an der bei ausreichend hohem Druck und/oder Temperatur die Reformierungsreaktion stattfindet, wobei der Brennstoff Methanol/Wasser zu Wasserstoff umgesetzt wird. Die Anordnung der Reformer-Katalysatorschicht innerhalb der Zelle gewährleistet, dass die Wärme der Anode für die Reformierung genutzt und umgekehrt die Anode über die endotherme Reformierungsreaktion gekühlt wird.

## Patentansprüche

1. Brennstoffzelle mit einem Reformer, enthaltend eine Reformerkammer, und mit einer Membran-Elektroden-Einheit, enthaltend eine Anodenkammer und eine anodische Elektrodenbeschichtung, **dadurch gekennzeichnet, dass** in der Anodenkammer im Anschluss an die anodische Elektrodenbeschichtung (2) der Membran-Elektroden-Einheit (MEA) eine zweite Reformer-Katalysatorschicht (5) vorgesehen ist, wobei die Elektrodenbeschichtung (2) sowohl für die Umsetzung von Methanol als auch für die Umsetzung von Wasserstoff geeignet ist.

2. Brennstoffzelle nach Anspruch 1, **dadurch gekennzeichnet, dass** zwischen der anodischen Elektrodenbeschichtung (2) der Membran-Elektroden-Einheit (MEA) und der Reformer-Katalysatorschicht (5) ein Separator (4) angeordnet ist.

3. Brennstoffzelle nach Anspruch 1 oder 2, **dadurch gekennzeichnet, dass** die Konzentration und/ oder die Zusammensetzung des Katalysators in der anodischen Elektrodenbeschichtung (2) variabel ist.

4. Brennstoffzelle nach einem der vorstehenden Ansprüche, **dadurch gekennzeichnet, dass** die zweite Reformer-Katalysatorschicht (5) in einer Menge von 3 bis 50 mg/cm² vorliegt.

5. Brennstoffzelle nach einem der vorstehenden Ansprüche, **dadurch gekennzeichnet, dass** die Membran (1) der Membran-Elektroden-Einheit (MEA) mit einem Textilgewebe verstärkt ist.

6. Verfahren zum Betrieb einer Brennstoffzelle nach Anspruch 1 oder einem der Ansprüche 2 bis 5, **dadurch gekennzeichnet, dass** die Brennstoffzelle bei niedrigem Druck und/oder Temperatur als Direkt-Methanol-Brennstoffzelle (DMFC) und bei hohem Druck und/oder Temperatur als mit Wasserstoff arbeitende Polymer-Elektrolyt-Membran(PEM)-Brennstoffzelle betrieben wird.

7. Verfahren nach Anspruch 5, **dadurch gekennzeichnet, dass** die Funktion als Direkt-Methanol-Brennstoffzelle beim Kaltstart der Brennstoffzelle genutzt wird.

8. Verfahren nach Anspruch 7, **dadurch gekennzeichnet, dass** beim Kaltstart während des Anfahrens der Brennstoffzelle an der Anode ein flüssiges Methanol/Wasser-Gemisch umgesetzt wird.

9. Verfahren nach Anspruch 6, **dadurch gekennzeichnet, dass** bei Dauerbetrieb der Betriebsdruck und/oder die Betriebstemperatur ausreichen, damit innerhalb der Brennstoffzelle die Reformierungsreaktion stattfindet.

10. Verfahren nach einem der Ansprüche 6 oder 9, **dadurch gekennzeichnet, dass** während des Betriebs eine Betriebstemperatur von zumindest 150°C und/oder ein Betriebsdruck von zumindest 5 bar herrscht.

11. Verfahren nach Anspruch 10, **dadurch gekennzeichnet, dass** im Dauerbetrieb die Brennstoffzelle als Hochtemperatur-Polymer-Elektrolyt-Membran (HT-PEM)-Brennstoffzelle arbeitet.

## Claims

1. Fuel cell having a reformer, including a reformer chamber, and having a membrane electrode assembly, including an anode chamber and an anodic electrode coating, **characterized in that** a second reformer catalyst layer (5) is provided in the anode chamber, following the anodic electrode coating (2) of the membrane electrode assembly (MEA) the electrode coating (2) being suitable both for the conversion of methanol and for the conversion of hydrogen.

2. Fuel cell according to Claim 1, **characterized in that** a separator (4) is arranged between the anodic electrode coating (2) of the membrane electrode assembly (MEA) and the reformer catalyst layer (5).

3. Fuel cell according to Claim 1 or 2, **characterized in that** the concentration and/or composition of the catalyst in the anodic electrode coating (2) is variable.

4. Fuel cell according to one of the preceding claims, **characterized in that** the second reformer catalyst layer (5) is present in an amount of from 3 to 50 mg/cm².

5. Fuel cell according to one of the preceding claims, **characterized in that** the membrane (1) of the membrane electrode assembly (MEA) is reinforced with a woven textile fabric.

6. Method for operating a fuel cell according to Claim 1 or one of Claims 2 to 5, **characterized in that** the fuel cell at low pressure and/or temperature is operated as a direct methanol fuel cell (DMFC) and at high pressure and/or temperature is operated as a polymer electrolyte membrane (PEM) fuel cell which operates with hydrogen.

7. Method according to Claim 5, **characterized in that** the function as a direct methanol fuel cell is utilized during a cold start of the fuel cell.

8. Method according to Claim 7, **characterized in that**, in the event of a cold start, while the fuel cell is starting up a liquid methanol/water mixture is reacted at the anode.

9. Method according to Claim 6, **characterized in that**, during long-turn operation, the operating pressure and/or the operating temperature are sufficient for the reforming reaction to take place inside the fuel cell.

10. Method according to one of Claims 6 or 9, **characterized in that**, during operation, an operating temperature of at least 150°C and/or an operating pressure of at least 5 bar prevails.

11. Method according to Claim 10, **characterized in that**, in long-term operation, the fuel cell operates as a high-temperature polymer electrolyte membrane (HT-PEM) fuel cell.

## Revendications

1. Pile à combustible comprenant un reformeur, comportant une chambre de reformeur, et comprenant une unité membrane-électrode, comportant une chambre d'anode et un revêtement anodique d'électrode, **caractérisée en ce que** dans la chambre d'anode il est prévu à la suite du revêtement (2) anodique d'électrode de l'unité (MEA) membrane-électrodes une deuxième couche (5) de catalyseur de reformeur, le revêtement (2) d'électrode étant approprié tant pour la réaction du méthanol que pour la réaction de l'hydrogène.

2. Pile à combustible suivant la revendication 1, **caractérisée en ce qu'**il est interposé entre le revêtement (2) anodique d'électrode de l'unité (MEA) membrane-électrode et la couche (5) de catalyseur de reformeur un séparateur (4).

3. Pile à combustible suivant la revendication 1 ou 2, **caractérisée en ce que** la concentration et/ou la composition du catalyseur du revêtement (2) anodique d'électrode est variable.

4. Pile à combustible suivant l'une des revendications précédentes, **caractérisée en ce que** la deuxième couche (5) de catalyseur de reformeur est présente en une quantité de 3 à 50 mg/cm².

5. Pile à combustible suivant l'une des revendications précédentes, **caractérisée en ce que** la membrane (1) de l'unité (MEA) membrane-électrode est renforcée par un tissu textile.

6. Procédé pour faire fonctionner une pile à combustible suivant la revendication 1 ou l'une des revendications 2 à 5, **caractérisé en ce qu'**il consiste à faire fonctionner la pile à combustible à basse pression et/ou à basse température en temps que pile à combustible directe au méthanol (DMFC) et sous haute pression et/ou haute température en tant que pile à combustible à polymère-électrolyte-membrane (PEM) fonctionnant à l'hydrogène.

7. Procédé suivant la revendication 6, **caractérisé en ce que** l'on utilise la fonction de pile à combustible directe au méthanol pour le démarrage à froid de la pile à combustible.

8. Procédé suivant la revendication 7, **caractérisé en ce que** l'on fait réagir lors du démarrage à froid, pendant le démarrage de la pile à combustible à l'anode, un mélange liquide de méthanol et d'eau.

9. Procédé suivant la revendication 6, **caractérisé en ce que** lors du fonctionnement permanent, la pression de fonctionnement et/ou la température de fonctionnement suffisent afin que la réaction de reformage ait lieu dans la pile à combustible.

10. Procédé suivant l'une des revendications 6 ou 9, **caractérisé en ce que** pendant le fonctionnement il règne une température de fonctionnement d'au moins 150°C et/ou une pression de fonctionnement d'au moins 5 bars.

11. Procédé suivant la revendication 10, **caractérisé en ce qu'**en fonctionnement permanent la pile à combustible opère en tant que pile à combustible à polymère-électrolyte-membrane à haute température (HT-PEM).
